# EUROPÄISCHE PATENTSCHRIFT

(11) **EP 0 738 428 B1**
(45) Veröffentlichungstag und Bekanntmachung des Hinweises auf die Patenterteilung: **02.02.2000**
(21) Anmeldenummer: 94926158.0
(22) Anmeldetag: 06.08.1994
(51) Int. Cl.: H01M 8/06

(54) **MODULAR AUFGEBAUTE KRAFTWERKSANLAGE ZUR ERZEUGUNG VON ELEKTRISCHER ENERGIE AUS SOLARENERGIE**
MODULAR POWER PLANT FOR THE GENERATION OF ELECTRICAL ENERGY FROM SOLAR ENERGY
CENTRALE MODULAIRE POUR LA GENERATION D'ENERGIE ELECTRIQUE A PARTIR DE L'ENERGIE SOLAIRE

(30) Priorität: 24.08.1993 DE 4328379
(43) Veröffentlichungstag der Anmeldung: 23.10.1996
(73) Patentinhaber: Binsmaier, Hannelore, D-85253 Erdweg-Grossberghofen (DE)
(72) Erfinder: Johnssen, Wolf, D-81675 München (DE)
(74) Vertreter: Honke, Manfred, Dr.-Ing.
(86) Internationale Anmeldenummer: EP9402614
(87) Internationale Veröffentlichungsnummer: WO9506334

(56) Entgegenhaltungen:
- EP-A- 0 345 908
- EP-A- 0 564 796
- FR-A- 1 340 155
- US-A- 4 988 580
- JOURNAL OF POWER SOURCES., vol.37, no.1/2, January 1992, LAUSANNE CH pages 255 - 264, XP000258157 G. J. SANDELLI 'fuel cell energy recovery from landfill gas'
- APPLIED ENERGY, vol.45, no.3, 1993 pages 219 - 240 V. ALDERUCCI ET AL 'Potential Biomass Resources of Sicily for Electric-Power Generation'
- ENERGY BIOMASS WASTES, vol.9, 1985 pages 1343 - 1368 EDWARD I WAN 'TECHNICAL AND ECONOMIC ASSESMENT OF BIOMASS-BASED FUEL CELL POWER SYSTEMS'
- PATENT ABSTRACTS OF JAPAN vol. 17, no. 71 (E-1319) 12 February 1993 & JP,A,04 274 172 (TOSHIBA CORP) 30 September 1992
- CHEMICAL ABSTRACTS, vol. 90, no. 22, 28 May 1979, Columbus, Ohio, US; abstract no. 171430c, HODAM, ROBERT H ET AL 'Small scale gasification of biomass to produce a low BTU gas' & SYMP. PAP: : ENERGY BIOMASS WASTES, 1978 pages 729 - 748

## Beschreibung

Die Erfindung betrifft ein Modulkraftwerk für die Erzeugung von elektrischer Energie aus Sonnenenergie. - Modulkraftwerk bedeutet, daß das Kraftwerk eine Mehrzahl von Modulen unterschiedlicher Funktion aufweist, aus denen das Kraftwerk insgesamt gleichsam bausteinartig zusammengesetzt ist. Die Module sind Elemente einer Serienfertigung. Es versteht sich, daß die Module über Funktionsleitungen und Steuerleitungen verbunden sind.

Ein Modulkraftwerk für die Erzeugung von elektrischer Energie aus Sonnenenergie ist nicht bekannt. Allerdings sind sogenannte Sonnenkraftwerke bekannt, die eine Vielzahl von gleichen Bauteilen, sogenannten Sonnenkollektoren, für die Aufnahme der Sonnenenergie aufweisen, die über einen thermischen Effekt mit Hilfe von Wärmekraftmaschinen oder über einen lichtelektrischen Effekt in elektrische Energie umgewandelt wird. Im übrigen sind Kraftwerke bekannt, die zumindest einen Vergasungsreaktor für die Vergasung von fossilen Brennstoffen und auch Biorohstoffen zu Brenngas aufweisen, wobei das Brennstoffgas über Wärmekraftmaschinen verstromt wird.

Biorohstoffe bezeichnet allgemein alle regenerativen Rohstoffe, d. h. solche Rohstoffe, die mit einer Produktionsrate auf biologischem Wege nach Maßgabe der Vegetationsperioden einer Region wiederherstellbar sind. Biorohstoffe stehen somit im Gegensatz zu fossilen Rohstoffen, die wesentlich langsamer gebildet als verbraucht werden. Ein Biorohstoff kann mit prinzipiell noch intakter Zellstruktur oder mit desintegrierter Struktur, beispielsweise als feines Pulver, zur Verfügung gestellt werden. Biorobstoffe enthalten im wesentlichen die Elemente Kohlenstoff, Wasserstoff, Sauerstoff und Stickstoff und sind eiweiß- und schwefelarm. Biorohstoffe bezeichnet im Rahmen der Erfindung alle schnell wachsenden Pflanzen, insbesondere perennierende Pflanzen, und auch ligninreiche Pflanzen. Biorohstoffe bezeichnet im Rahmen der Erfindung vorzugsweise C4-Pflanzen, insbesondere perennierende C4-Pflanzen, C4-Schilfpflanzen und C4-Gräser. Der Eiweiß- und Schwefelgehalt können durch die Düngung beeinflußt werden.

Im übrigen ist die direkte Verstromung von Wasserstoff mittels Brennstoffzellen gut bekannt. Bewährt sind sie insbesondere für verhältnismäßig geringe Leistungen im Bereich von 1 bis 5 MW. Brennstoffzellen haben gegenüber Wärmekraftmaschinen den Vorteil, daß sie nicht den thermodynamischen Beschränkungen des Wirkungsgrades aus dem Carnot'schen Kreislauf unterworfen sind. Brennstoffzellen sind theoretisch in der Lage. die Verbrennungswärme aus der Reaktion von Wasserstoff mit Sauerstoff zu Wasser praktisch vollständig in elektrische Energie umzuwandeln. In der Praxis sind mit Brennstoffzellen daher ohne besondere Schwierigkeiten deutlich höhere Wirkungsgrade als mit Wärmekraftmaschinen erreichbar. Dies setzt allerdings voraus, daß die Katalysatoren der Brennstoffzellen nicht durch Katalysatorgifte, welche möglicherweise in dem Wasserstoff enthalten sein können, vergiftet werden.

Molekularer Wasserstoff steht nicht als Rohstoff zur Erzeugung von elektrischer Energie zur Verfügung, sondern muß aus wasserstoffhaltigen Rohstoffen gewonnen werden. Die Erzeugung von Wasserstoff aus Wasser mittels normaler Elektrolyse verbraucht mehr Strom, als mit dem Wasserstoff erzeugt werden kann, und kommt daher ohne weiteres nicht in Frage. Die katalytische Wasserspaltung in Wasserstoff und Sauerstoff ist sehr langsam und liefert mit hohem Aufwand nur geringe Mengen, aus welchem Grunde eine kommerzielle Nutzung unattraktiv ist.

Seit langem gut bekannt sind die Erzeugung von sogenanntem Synthesegas aus Kohle, welches im wesentlichen Wasserstoff und Kohlenmonoxid enthält, und die hierfür erforderlichen Anlagen. Dieser Prozeß wird als Kohlevergasung bezeichnet. In einer sogenannten Watershift-Reaktion kann das Kohlenmonoxid in dem Synthesegas unter Zugabe von Wasserdampf und bei erhöhter Temperatur in Wasserstoff und Kohlendioxid umgesetzt werden.

Grundsätzlich ist die Verwendung von Synthesegas zum Betrieb von Brennstoffzellen möglich, in der Praxis haben sich jedoch erhebliche Nachteile gezeigt. Zum ersten enthält Kohle in der Regel rohstoff-bürtigen Schwefel, der als gasförmige Schwefelverbindungen im Synthesegas mitgeschleppt wird. Schwefelverbindungen sind jedoch in der Regel hochgradige Katalysatorgifte, welche den Katalysator einer Brennstoffzelle und somit die Brennstoffzelle selbst irreversibel desaktivieren können. Im übrigen sind Schwefelgase eine aus Gründen des Umweltschutzes unerwünschte Emission. Zum zweiten ist die Erzeugung von Synthesegas aus Kohle insgesamt besonders teuer und aufwendig, da sich die Aufwendungen aus beispielsweise dem Untertagebergbau, dem Kohlenvergasungsprozeß und der erforderlichen Entschwefelung akkumulieren.

Die Erzeugung von elektrischer Energie erfolgt bis heute zentral in Großkraftwerken, obgleich die Leistungsabnahme der einzelnen dezentralen Verbraucher demgegenüber klein ist.

Durch den Aufsatz "Technical and Economic Assesment of Biomass-based Fuel Cell Power Systems" von Edward I Wan (Energy Biomass Wastes, Vol. 9, 1985, 1343 bis 1368) ist es generell bekannt, mittels einer Brennstoffzelle ein aus Biorohstoffen gewonnenes Brennstoffgas zu verstromen. Dieses Brennstoffgas wird aus Holzbestandteilen oder anaeroben tierischen Verdauungsprodukten gewonnen. Dabei wird Luft zugeführt, um einen Teil des im Zuge der Vergasung entstehenden Brennstoffgases zu verbrennen.

Der Erfindung liegt das technische Problem zugrunde, Sonnenenergie auf einfache Weise dezentral in elektrische Energie umzuwandeln.

Zur Lösung dieses technischen Problems ist Gegenstand der Erfindung ein Modulkraftwerk für die Erzeugung von elektrischer Energie aus Sonnenenergie, - mit
a) einem Umformmodul für die Umformung von Sonnenenergie in Biorohstoffe, die ausreichend frei von rohstoff-bürtigem Schwefel sind, in Form einer landwirtschaftlichen Kulturfläche mit darauf angebauten, in Biorohstoffe umsetzbaren Pflanzen, insbesondere C4-Pflanzen,
b) einem für eine allotherme Vergasung eingerichteten Vergasungsmodul in Form eines Vergasungsreaktors für die Vergasung der Biorohstoffe zu einem Brennstoffgas unter Zufuhr von extern erzeugter Wärme, und mit einem im wesentlichen Wasserdampf enthaltenden Vergasungsmittel, bei Temperaturen sowie bei einer Verweilzeit der zu vergasenden Produkte in der Vergasungszone des Vergasungsreaktors, die eine Teerkondensation in der Vergasungszone nachgeschalteten Zonen des Vergasungsmoduls (2) und/oder in einem nachgeschalteten Brennstoffzellenmodul (3) unterdrücken,
c) einem Brennstoffzellenmodul, in dem das Brennstoffgas mit Hilfe einer Brennstoffzellentechnologie verstromt wird,
   wobei der Umformmodul ein Aggregat zur Biorohstoffernte und ein Aufbereitungsaggregat zur Aufbereitung der Biorohstoffe zu einem Vergasungsvorprodukt aufweist, wobei der Vergasungsmodul über eine Beschickeinrichtung mit dem Aufbereitungsaggregat verbunden ist, wobei der Brennstoffzellenmodul über eine Einrichtung zur Brenngasreinigung mit dem Vergasungsmodul verbunden ist, wobei der Vergasungsmodul und der Brennstoffzellenmodul in bezug auf die Anlagenleistung leistungsmäßig aufeinander und so abgestimmt sind, daß ein Teilstrom des Brennstoffgases für die Wasserdampferzeugung und ein weiterer Teilstrom und/oder Abwärme des Modulkraftwerkes für die Trocknung der geernteten Biorohstoffe einsetzbar sind, wobei der Umformmodul in bezug auf die Kulturfläche von Fall zu Fall nach Maßgabe der vorgegebenen Anlagenleistung dimensioniert ist, wobei der Umformmodul ein Aufbereitungsaggregat in Form von zumindest einer Erntemaschine für die Biorohstoffe und in Form einer Häckseleinrichtung oder Pelletiereinrichtung aufweist, und für die aufbereitete Biomasse eine Lageeinrichtung besitzt, mit der vegetationsbedingte Mengenschwankungen der aufbereiteten Biorohstoffe ausgleichbar sind, und wobei ferner die wesentlichen Elemente des Umformmoduls, des Vergasungsmoduls und des Brennstoffzellenmoduls als im montierten und demontierten Zustand transportable Modulelemente des Modulkraftwerkes vorgefertigt sind.

Im Rahmen der Erfindung liegt es, die geernteten Biorohstoffe zu bündeln und/oder Ballen zusammenzufassen und zu lagern, um die Biorohstoffe zu gegebener Zeit zu dem Vergasungsvorprodukt aufzubereiten. Man kann aber auch für die aufbereitete Biomasse eine Lageeinrichtung vorsehen, mit der vegetationsbedingte Mengenschwankungen der aufbereiteten Biorohstoffe ausgleichbar sind. Es versteht sich, daß im Rahmen der Erfindung mehrere Modulkraftwerke des beschriebenen Aufbaus nebeneinander installiert werden können, wobei die Auslegung des Umformmoduls auch so geschehen kann, daß dieses mehrere der Modulkraftwerke bedient. Die erzeugte elektrische Energie kann am Ort verbraucht oder in ein Netz eingespeist werden. Die wesentlichen Elemente des Umformmoduls, der Vergasungsmodul und der Brennstoffzellenmodul sind vorzugsweise als im montierten und demontierten Zustand transportable Modulelemente des Modulkraftwerkes vorgefertigt.

Die Erfindung geht von der Erkenntnis aus, daß Sonnenenergie über natürliche Sonnenkollektoren, nämlich mit Hilfe von in Biorohstoffe umsetzbaren Pflanzen, umfangreich und im Rhythmus der Vegetationsperiode einer geographischen Zone mit geringem technischen Aufwand gewonnen und gespeichert werden kann. Die so gespeicherte Sonnenenergie kann ohne großen Aufwand auch verstromt werden, wenn die Verstromung am Ort der Speicherung erfolgt und dazu die Kombination der Merkmale b) und c) verwirklicht wird und fernerhin dazu Module für ein Kraftwerk verhältnismäßig geringer Leistung von z. B. 1 bis 5 MW an dem Speicherort installiert wird. Dazu werden die einzelnen Module zentral hergestellt und zu dem Speicherort verbracht sowie aus Transportgründen erforderlichenfalls in weitere Komponenten zerlegt. Am Installationsort erfolgt die vorstehend beschriebene Abstimmung des Umformmoduls auf die Leistung, die der Vergasungsmodul und der Brennstoffmodul auslegungsmäßig mitgebracht haben und die insoweit vorgegeben ist. Insoweit kombiniert die Erfindung einen natürlichen Umwandlungsprozeß für die Sonnenenergie mit Hardwareelementen und dem so gebildeten Umformmodul mit bewährten Aggregaten für die Erzeugung und Verstromung des Brennstoffgases, die ihrerseits als Modul eingerichtet sind.

Vorzugsweise wird der Vergasungsmodul so betrieben, daß das Brenngas ein Wasserdampf/Biomasse-Verhältnis von größer 1 aufweist. Der Vergasungsmodul ist zweckmäßigerweise mit einem Vergasungsreaktor ausgerüstet, der unter Druck mit Wasserdampf als Vergasungs- und Fluidisierungsmittel arbeitet, wie es für fossile Brennstoffe an sich bekannt ist (vgl. BP 0 329 673 B1).

Auch in bezug auf den Brennstoffzellenmodul bestehen im Rahmen der Erfindung verschiedene Möglichkeiten. So kann der Brennstoffzellenmodul zumindest eine Brennstoffzelle mit einem phosphorsäurehaltigen Elektrolyten aufweisen. Nach einer anderen Ausführungsform weist der Brennstoffzellenmodul zumindest eine Brennstoffzelle mit einem Elektrolyten aus einer karbonatsalzhaltigen Schmelze auf. Nach einem weiteren Vorschlag ist der Brennstoffzellenmodul mit zumindest einer "Solid Oxide"-Brennstoffzelle versehen. Ein besonders bedeutungsvoller Vorschlag der Erfindung geht dahin, daß der Brennstoffzellenmodul zumindest eine Protonenaustauschmembran-Brennstoffzelle aufweist. Eine bevorzugte Ausführungsform der Erfindung, die sich durch Funktionssicherheit und lange Lebensdauer der Module und insbesondere des Brennstoffzellenmoduls auszeichnet, ist gekennzeichnet durch die Kombination eines Vergasungsmoduls, der für eine allotherme Vergasung eingerichtet ist, mit einem Brennstoffzellenmodul mit zumindest einer Brennstoffzelle mit einem phosphorsäurehaltigen Elektrolyten. Man kann aber auch in einem Brennstoffzellenmodul Brennstoffzellen nach Ansprüchen 4 und/oder 5 und/oder 6 und/oder 7 kombinieren. Wie immer der Brennstoffzellenmodul eingerichtet ist, stets ist es für die Lebensdauer vorteilhaft, in dem Vergasungsmodul ein Sauerstoff/Biorohstoff-Mengenverhältnis und eine Gasphasentemperatur einzustellen, die ein praktisch stickstoffoxidfreies Brenngas gewährleisten. Überraschenderweise tritt bei einem so eingerichteten Vergasungsmodul auch eine störende Bildung von Teerkondensation nicht auf. Das insbesondere dann der Fall, wenn die Vergasung selbst allotherm ist.

Ein erfindungsgemäßes Modulkraftwerk kann mit geringem Aufwand autark arbeiten. Dazu lehrt die Erfindung, daß zusätzlich ein Wasserdampferzeugungsmodul angeordnet ist, der von einem Teilstrom des Brennstoffgases beheizbar ist. Andererseits kann der Umwandlungsmodul mit einer Trocknungseinrichtung ausgerüstet sein, die von der Abwärme des Modulkraftwerkes beheizt ist. Bei einem erfindungsgemäßen Modulkraftwerk fällt im Zusammenhang mit der Vergasung Asche an. Sie kann dem Umwandlungsmodul als Dünger wieder zugeführt werden. Die in Biorohstoffe umsetzbaren Pflanzen, insbesondere die perennierenden C4-Pflanzen, sterben erst nach fünf bis zehn Vegetationsperioden ab. Erst danach muß der Umformmodul als landwirtschaftliche Kulturfläche neu bestellt werden.

Im folgenden werden einige in einen Brennstoffzellenmodul eines erfindungsgemäßen Modulkraftwerkes einsetzbare Brennstoffzellen und deren Integration in ein Vergasungsmodul ausführlicher erläutert.

Im Rahmen eines Vorschlages der Erfindung wird wie folgt verfahren:

Es werden Biorobstoffe eingesetzt, die z. B. durch geeignete Düngung, von rohstoff-bürtigem Schwefel ausreichend frei sind. In einem Oxidationsreaktor wird aus den Biorohstoffen mit einem sauerstoffhaltigen Vergasungsmittel durch Teiloxidation ein Brennstoffgas erzeugt, welches Kohlenmonoxid und Wasserstoff enthält. In dem Oxidationsreaktor werden ein Sauerstoff/Biorohstoff-Mengenverhältnis und eine Gasphasentemperatur eingestellt und aufrechterhalten, die ein praktisch stickstoffoxidfreies Brennstoffgas gewährleisten. Das aus dem Oxidationsreaktor abgezogene Brennstoffgas wird in einem Abscheider von Schwebstoffen befreit. Das von Schwebstoffen befreite Brennstoffgas wird in Brennstoffzellen verstromt, die eine poröse Anode, eine poröse Kathode und einen Elektrolyten aus einer karbonatsalzhaltigen Schmelze aufweisen. Anode bezeichnet die ggf. katalytisch aktive Elektrode der Brennstoffzelle, an der das Brennstoffgas entlanggeleitet und unter Abgabe von Elektronen oxidiert wird. Kathode bezeichnet die ggf. katalytisch aktive Elektrode oder Brennstoffzelle an der ein Verbrennungsmittel entlanggeleitet und unter Aufnahme von Elektronen reduziert wird. Das Verbrennungsmittel muß Kohlendioxid enthalten zur Umsetzung mit Sauerstoff zu Karbonationen an der Kathode. Porös bezeichnet eine Elektrodenstruktur, welche einerseits einen Kontakt aller drei Phasen Brennstoffgas bzw. Verbrennungsmittel, Elektrode bzw. Katalysator sowie Elektrolyt gewährleistet, andererseits aber, beispielsweise durch Wirkung von Kapillarkräften, ein Uberströmen des Elektrolyten in einen Brennstoffgasraum bzw. Verbrennungsmittelgasraum verhindert. Der Begriff porös umfaßt daher auch Gitterstrukturen geeigneter Maschenweite. Brennstoffzellen mit einem Elektrolyten aus einer karbonatsalzhaltigen Schmelze zeichnen sich durch einen besonders hohen Wirkungsgrad und eine hohe spezifische Leistung aus aufgrund der vergleichsweise hohen Betriebstemperatur. Ein weiterer Vorteil dieser Art Brennstoffzellen in Verbindung mit der Verstromung eines Brennstoffgases aus Biorohstoffen besteht darin, daß Kohlenmonoxid nicht nur nicht störend für die Katalyse ist, sondern sogar ebenso wie Wasserstoff zur Erzeugung elektrischer Energie verwertet wird. Dabei reagieren das Kohlenmonoxid und Karbonat-Ionen an der Anode unter Abgabe von Elektronen zu Kohlendioxid. Insgesamt wird durch die Kombination ein beachtlicher synergistischer Effekt erzielt, welcher darin besteht, daß mit besonders hohem Wirkungsgrad und mit hoher Zuverlässigkeit aus einem sehr billigen und regenerativem Rohstoff elektrische Energie erzeugbar ist bei praktisch keiner Emission von Schwefelverbindungen, Stickstoffoxiden und Partikeln. Endprodukte des Verfahrens sind im wesentlichen unschädliches Wasser und bei der konventionellen Energieerzeugung unvermeidbares Kohlendioxid. Außerdem fällt Wärme an. Sie kann insbesondere bei der allothermen Verfahrensweise in den Prozeß zurückgeführt werden.

Im Rahmen eines anderen Vorschlages der Erfindung wird wie folgt verfahren: Es werden Biorohstoffe eingesetzt, die, z. B. durch geeignete Düngung, von rohstoff-bürtigem Schwefel ausreichend frei sind. In einem Oxidationsreaktor wird aus den Biorohstoffen mit einem sauerstoffhaltigen Vergasungsmittel durch Teiloxidation ein Brennstoffgas erzeugt, welches Kohlenmonoxid und Wasserstoff enthält. In dem Oxidationsreaktor werden ein Sauerstoff/Biorohstoff-Mengenverhältnis und eine Gasphasentemperatur eingestellt und aufrechterhalten, die ein praktisch stickstoffoxidfreies Brennstoffgas gewährleisten. Das aus einem Oxidationsreaktor abgezogene Brennstoffgas wird in einem Abscheider von Schwebstoffen befreit. Das von Schwebstoffen befreite Brennstoffgas wird in Brennstoffzellen verstromt, die eine poröse Anode, eine poröse Kathode und einen säurehaltigen Elektrolyten aufweisen. Dieses Verfahren weist im wesentlichen alle Eigenschaften und Vorteile des Verfahrens mit einem Elektrolyten aus einer karbonatsalzhaltigen Schmelze auf. Im Unterschied dazu wird jedoch die Brennstoffzelle bei vergleichsweise niedriger Temperatur betrieben. Insgesamt ist der Wirkungsgrad mit einem säurehaltigen Elektrolyten etwas geringer als mit einem Elektrolyten aus einer karbonatsalzhaltigen Schmelze. Dies wird jedoch dadurch, ausgeglichen, daß aufgrund der vergleichsweise niedrigen Betriebstemperatur evtl. Elektrodenkorrosionseffekte besser beherrschbar sind. Insofern wird eine besondere Zuverlässigkeit erreicht, da beispielsweise eine Versinterung des Traggerüstes der Porenstrukturen der Elektroden sicher vermeidbar ist. Als Elektrolyt sind Schwefelsäure oder Phosphorsäure bevorzugt. Diese beiden Säuren, insbesondere Phosphorsäure, haben bei nur geringen Wasserbeimengungen einen relativ hohen Siedepunkt, so daß die Brennstoffzellen bei möglichst hoher Temperatur, beispielsweise 160° C, betrieben werden können.

Das erfindungsgemäße Verfahren kann bezüglich der Teiloxidation in dem Oxidationsreaktor in verschiedenen Ausführungsformen betrieben werden. Insbesondere kann eine direkte Teilverbrennung von Biorohstoffen im Oxidationsreaktor durchgeführt werden. In einer Ausführungsform, der besondere Bedeutung zukommt, wird die Teiloxidation unter Zufuhr von extern erzeugter Wärme und mit einem im wesentlichen Wasserdampf enthaltenden Vergasungsmittel durchgeführt. Diese Verfahrensweise ist in anderem Zusammenhang als allotherme Vergasung bekannt. Die Zufuhr von extern erzeugter Wärme ist bei einer allothermen Vergasung erforderlich, da die Reaktion von Biorohstoff mit Wasserdampf zu Brennstoffgas insgesamt endotherm ist. Die Wärme für die Teiloxidation kann dabei vorzugsweise durch Verbrennung von Biorohstoff oder von Brennstoffgas erzeugt werden. Vorteilhafterweise wird die Wärme für die Teiloxidation mittels eines üblichen Wärmeträgergases über einen Wärmetauscher in den Oxidationsreaktor eingetragen. In einer anderen Ausführungsform des erfindungsgemäßen Verfahrens wird die Teiloxidation ohne Zufuhr von extern erzeugter Wärme und mit einem im wesentlichen Wasserdampf und molekularen Sauerstoff bzw. Luft enthaltenden Vergasungsmittel durchgeführt. Diese Verfahrensweise ist in anderem Zusammenhang als autotherme Vergasung bekannt. Dabei erfolgen mit dem Anteil molekularen Sauerstoffs im Vergasungsmittel exotherme Oxidationsreaktionen, wodurch "in situ" die erforderliche Wärme für die endotherme Reaktion von Wasserdampf und Biorohstoff entsteht. Eine autotherme oder allotherme Vergasung ist grundsätzlich bekannt aus der Literaturstelle "Stahl und Eisen", Band 110, 1990, Nr. 8, Seiten 131 bis 136, jedoch in anderem Zusammenhang.

Ein weiteres, im Rahmen der Erfindung einsetzbares Verfahren zur Erzeugung elektrischer Energie aus Biorohstoffen, weist die folgenden Merkmale auf:

Es werden Biorohstoffe eingesetzt, die, z. B. durch geeignete Düngung, von rohstoff-bürtigem Schwefel ausreichend frei sind. In einem Oxidationsreaktor wird aus den Biorohstoffen mit einem sauerstoffhaltigen Vergasungsmittel durch Teiloxidation ein Brennstoffgas erzeugt, welches Kohlenoxid und Wasserstoff enthält. In dem Oxidationsreaktor werden ein Sauerstoff/Biorohstoff-Mengenverhältnis und eine Gasphasentemperatur eingestellt und aufrechterhalten, die ein praktisch stickstoffoxidfreies Brennstoffgas gewährleisten. Das aus dem Oxidationsreaktor abgezogene Brennstoffgas wird in einem Abscheider von Schwebstoffen befreit. Das von Schwebstoffen befreite Brennstoffgas wird in Brennstoffzellen verstromt, die eine poröse Anode, eine poröse Kathode und einen festen Elektrolyten aus einem Metalloxid aufweisen, wobei die Brennstoffzellen bei zumindest 800° C betrieben werden. Auch hier kann bei der Brenngaserzeugung autotherm oder allotherm gearbeitet werden.

Aufgrund der sehr hohen Betriebstemperatur von Brennstoffzellen mit einem festen Elektrolyten aus einem Metalloxid ist nicht nur eine katalytische Wirkung der Elektroden entbehrlich, sondern es stellen sich auch ohne weiteres sehr hohe Reaktionsraten des Brennstoffgases an der Anode und eines Verbrennungsmittels an der Kathode ein, da die thermische Energie der Gase erheblich über der Aktivierungsenergie der heterogenen Dissoziationsreaktionen liegt. Hohe Reaktionsraten ermöglichen ihrerseits hohe spezifische elektrische Leistungen der Brennstoffzellen. Daher werden die Brennstoffzellen in bevorzugter Ausführungsform bei zumindest 1000° C, vorzugsweise bei zumindest 1200° 0, betrieben. Betriebstemperaturen in dieser Höhe sind ohne weiteres einrichtbar, wenn die Materialien der Anode, der Kathode und des Elektrolyten hinsichtlich ihrer thermischer Ausdehnungskoeffizienten in üblicher Weise aufeinander abgestimmt oder angepaßt sind. Es versteht sich, daß für die Materialien der Anode und der Kathode auch ausreichend korrosionsbeständige Stoffe gewählt werden. Eine hohe Ionenleitfähigkeit des festen Elektrolyten ist einrichtbar, wenn als Elektrolyt eine Mischung aus Zirkoniumoxid und Calciumoxid oder aus Zirkoniumoxid und Yttriumoxid verwendet wird. Eine hohe Ionenleitfähigkeit in Verbindung mit den hohen Reaktionsraten an den Elektroden gewährleistet eine besonders hohe spezifische Leistung der Brennstoffzellen. In weiterer Ausbildung wird hier vorteilhafterweise als Anodenmaterial ein keramisches Metall, vorzugsweise aus Zirkoniumoxiden mit Nickel oder Cobalt, verwendet. Als Kathodenmaterial wird vorteilhafterweise LaNiO₃ oder dotiertes Indiumoxid eingesetzt.

Zur Reduzierung von möglicherweise störendem Kohlenmonoxid in dem Brennstoffgas kann das Brennstoffgas in einem Watershift-Reaktor unter Zufuhr von Wasserdampf und von Wärme behandelt werden zur Umwandlung von Kohlenmonoxid in Wasserstoff und Kohlendioxid. Ein eventuell störender Kohlenwasserstoffgehalt des Brenngases kann dadurch verringert werden, daß das Brennstoffgas unmittelbar vor der Verstromung durch einen Reformer mit einem Katalysator, vorzugsweise mit einem Übergangsmetall-Katalysator, höchstvorzugsweise mit einem Nickel-Katalysator, geführt wird, wobei der Katalysator auf demselben Temperaturniveau wie die Brennstoffzellen betrieben wird.

Im folgenden wird die Erfindung anhand einer lediglich ein Ausführungsbeispiel darstellenden Zeichnung ausführlicher erläutert. Es zeigen:

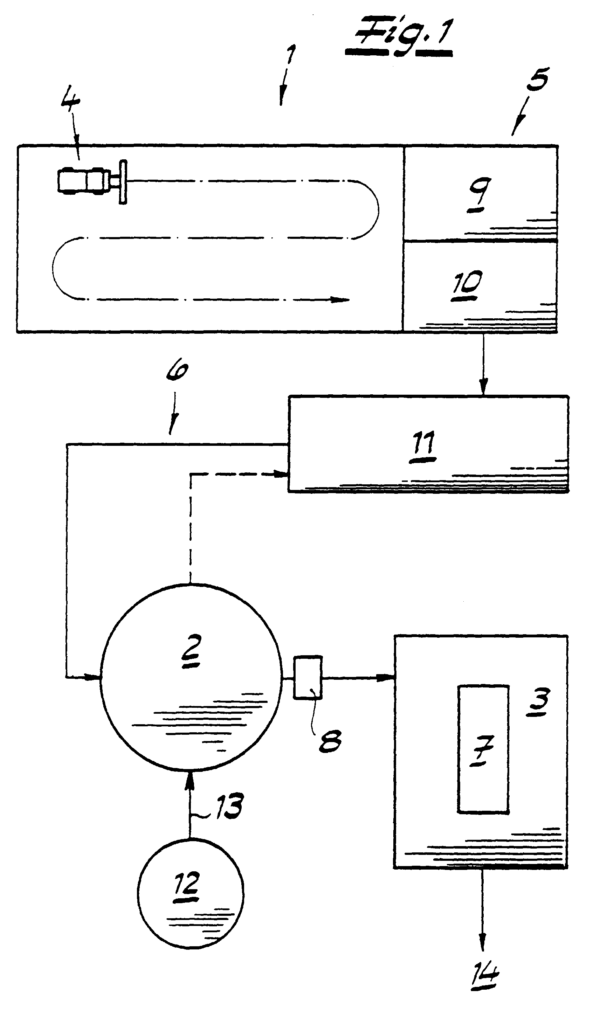

- **Fig. 1**: ein Blockschema eines erfindungsgemäßen Modulkraftwerkes und
- **Fig. 2**: ein Funktionsschema zu dem Gegenstand nach Fig. 1 in bezug auf den Vergasungsmodul und den Brennstoffzellenmodul.

Das in den Figuren dargestellte Modulkraftwerk dient zur Erzeugung von elektrischer Energie aus Sonnenenergie. Zu dem Modulkraftwerk gehören drei Module besonderer Funktion:

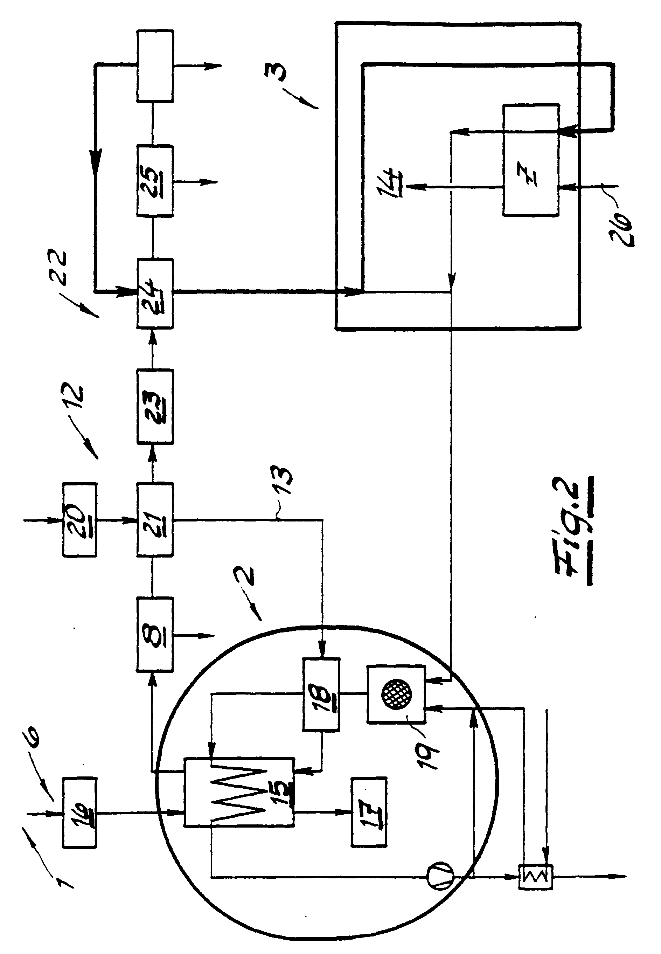

Ein Umformmodul 1 für die Umformung von Sonnenenergie in Biorohstoffe, die ausreichend frei von rohstoff-bürtigem Schwefel sind, in Form einer landwirtschaftlichen Kulturfläche mit darauf angebauten, in Biorohstoffe umsetzbaren Pflanzen, insbesondere perennierende C4-Pflanzen. Ein Vergasungsmodul 2 in Form eines Vergasungsreaktors für die Vergasung der Biorohstoffe in Anwesenheit von Wasserdampf zu einem Brennstoffgas bei Temperaturen sowie bei einer Verweilzeit der zu vergasenden Produkte in der Vergasungszone des Vergasungsreaktors, die eine Teerkondensation in der Vergasungszone nachgeschalteten Zonen des Vergasungsmoduls und/oder in einem nachgeschalteten Brennstoffzellenmodul unterdrückt. Ein Brennstoffzellenmodul 3, in den das Brennstoffgas verstromt wird. - Der Umformmodul 1 besitzt ein Aggregat 4 zur Biorohstoffernte und ein Aufbereitungsaggregat 5 zur Aufbereitung der Biorohstoffe zu einem Vergasungsvorprodukt. Das Aufbereitungsaggregat kann stationär angeordnet oder fahrbar ausgebildet sein. Der Vergasungsmodul 2 ist über eine Beschickeinrichtung 6 mit dem Aufbereitungsaggregat 5 verbunden. Der Brennstoffzellenmodul 3 mit einer Brennstoffzelle 7 ist über eine Einrichtung 8 zur Brenngasreinigung mit dem Vergasungsmodul 2 verbunden. Die Anordnung ist so getroffen, daß der Vergasungsmodul 2 und der Brennstoffzellenmodul 3 in bezug auf die Anlagenleistung leistungsmäßig aufeinander und so abgestimmt sind, daß ein Teilstrom des Brennstoffgases für die Wasserdampferzeugung und ein weiterer Teilstrom und/oder die Abwärme des Modulkraftwerkes für eine Trocknung der geernteten Biorobstoffe einsetzbar sind. Der Umformmodul 1 besitzt ein Aufbereitungsaggregat 5 für die Biorohstoffe in Form einer Häckseleinrichtung 9 oder einer Pelletiereinrichtung 10. Der Umformmodul 1 besitzt fernerhin für die aufbereitete Biomasse eine Lagereinrichtung 11, mit der vegetationsbedingte Mengenschwankungen der aufbereiteten Biorohstoffe ausgleichbar sind. Die wesentlichen Elemente des Umformmoduls 1, aber auch der Vergasungsmodul 2 und der Brennstoffzellenmodul 3 sind im montierten oder demontierten Zustand transportabel und werden im allgemeinen an zentraler Stelle vorgefertigt. Aus der Fig. 2 entnimmt man, daß der Vergasungsmodul 2 für eine allotherme Vergasung eingerichtet ist. Der Vergasungsreaktor ist im allgemeinen für eine Druckvergasung mit Wasserdampf ausgelegt, wobei der Wasserdampf als Vergasungs- und Fluidisierungsmittel dient. Wie bereits erwähnt, kann der Brennstoffzellenmodul 3 die verschiedensten, in der Praxis gebräuchlichen Brennstoffzellen 7 aufweisen. Zusätzlich ist ein Wasserdampferzeugungsmodul 12 über eine Leitung 13 vorgesehen, der von einem Teilstrom des Brennstoffgases durch Verbrennung beheizbar ist. Wie beschrieben kann die Abwärme benutzt werden.

Die elektrische Energie kann bei 14 aus dem Modulkraftwerk abgezogen und an Ort und Stelle verbraucht oder in ein Netz eingespeist werden.

In der Fig. 2 erkennt man in dem Vergasungsmodul 2 den Vergasungsreaktor 15 mit einer Einrichtung 16 für die Zuführung der Vergasungsvorprodukte und mit einem Ascheabzug 17. Im übrigen ist ein Wärmetauscher 18 vorgesehen, der den Wasserdampf überhitzt. Dieser Wärmetauscher 18 wird über eine Brennkammer 19 beheizt, der ein Teilstrom des Brennstoffgases zugeführt wird. Das für den Wasserdampf erforderliche Wasser wird über eine Wasseraufbereitungseinrichtung 20 geführt und einem Dampfgenerator 21 zugeführt. Es versteht sich, daß die erforderlichen Pumpen und Ventile und Einrichtungen zur Abwärmenutzung zugeschaltet sind.

Der Brennstoffzellenmodul 3 arbeitet mit zumindest einer der beschriebenen Brennstoffzellen 7, dem das Brennstoffgas zugeführt wird, welches zuvor gereinigt und von Restschwefel befreit wurde. Vergasungsmodul 2 und Brenstoffzellenmodul 3 sind über eine Installation 22 verbunden, wobei ein Reaktor 23 wesentlich ist, in dem über einen Wassergasprozeß der Wasserstoffgehalt des Brennstoffgases erhöht wird. Im übrigen gehören zur Installation ein Wärmetauscher 24 und eine Quencheinrichtung 25.

Das so vorbehandelte Brennstoffgas tritt anodenseitig in die Brennstoffzelle 7 ein, in die im übrigen kathodenseitig über die Leitung 26 Luft eingeführt wird. Insoweit zeigt die Fig. 2 nur ein Beispiel.

## Patentansprüche

1. Modulkraftwerk für die Erzeugung von elektrischer Energie aus Sonnenenergie, - mit
a) einem Umformmodul (1) für die Umformung von Sonnenenergie in Biorohstoffe, die ausreichend frei von rohstoff-bürtigem Schwefel sind, in Form einer landwirtschaftlichen Kulturfläche mit darauf angebauten, in Biorohstoffe umsetzbaren Pflanzen, insbesondere C4-Pflanzen,
b) einem für eine allotherme Vergasung eingerichteten Vergasungsmodul (2) in Form eines Vergasungsreaktors für die Vergasung der Biorohstoffe zu einem Brennstoffgas unter Zufuhr von extern erzeugter Wärme, und mit einem im wesentlichen Wasserdampf enthaltenden Vergasungsmittel, bei Temperaturen sowie bei einer Verweilzeit der zu vergasenden Produkte in der Vergasungszone des Vergasungsreaktors, die eine Teerkondensation in der Vergasungszone nachgeschalteten Zonen des Vergasungsmoduls (2) und/oder in einem nachgeschalteten Brennstoffzellenmodul (3) unterdrücken,
c) einem Brennstoffzellenmodul (3), in dem das Brennstoffgas mit Hilfe einer Brennstoffzellentechnologie verstromt wird,
wobei der Umformmodul (1) ein Aggregat (4) zur Biorohstoffernte und ein Aufbereitungsaggregat (5) zur Aufbereitung der Biorohstoffe zu einem Vergasungsvorprodukt aufweist, wobei der Vergasungsmodul (2) über eine Beschickeinrichtung (5) mit dem Aufbereitungsaggregat (5) verbunden ist, wobei der Brennstoffzellenmodul (3) über eine Einrichtung (8) zur Brenngasreinigung mit dem Vergasungsmodul (2) verbunden ist, wobei der Vergasungsmodul (2) und der Brennstoffzellenmodul (3) in bezug auf die Anlagenleistung leistungsmäßig aufeinander und so abgestimmt sind, daß ein Teilstrom des Brennstoffgases für die Wasserdampferzeugung und ein weiterer Teilstrom und/oder Abwärme des Modulkraftwerkes für die Trocknung der geernteten Biorohstoffe einsetzbar sind, wobei der Umformmodul (1) in bezug auf die Kulturfläche von Fall zu Fall nach Maßgabe der vorgegebenen Anlagenleistung dimensioniert ist, wobei der Umformmodul (1) ein Aufbereitungsaggregat (5) in Form von zumindest einer Erntemaschine für die Biorohstoffe und in Form einer Häckseleinrichtung (9) oder Pelletiereinrichtung (10) aufweist und für die aufbereitete Biomasse eine Lageeinrichtung (11) besitzt, mit der vegetationsbedingte Mengenschwankungen der aufbereiteten Biorohstoffe ausgleichbar sind, und wobei ferner die wesentlichen Elemente des Umformmoduls (1), des Vergasungsmoduls (2) und des Brennstoffzellenmoduls (3) als im montierten und demontierten Zustand transportable Modulelemente des Modulkraftwerkes vorgefertigt sind.

2. Modulkraftwerk nach Anspruch 1, dadurch gekennzeichnet, daß der Vergasungsmodul (2) mit zumindest einem Vergasungsreaktor ausgerüstet ist, welcher unter Druck mit Wasserdampf als Vergasungs- und Fluidisierungsmittel arbeitet.

3. Modulkraftwerk nach Anspruch 1 oder 2, dadurch gekennzeichnet, daß in dem Vergasungsmodul (2) ein Sauerstoff/Biorohstoff-Mengenverhältnis und eine Gasphasentemperatur eingestellt sind, die ein praktisch stickstoffoxidfreies Brennstoffgas gewährleisten.

4. Modulkraftwerk nach einem der Ansprüche 1 bis 3, dadurch gekennzeichnet, daß der Brennstoffzellenmodul (3) zumindest eine Brennstoffzelle (7) mit einem phosphorsäurehaltigen Elektrolyten aufweist.

5. Modulkraftwerk nach einem der Ansprüche 1 bis 3, dadurch gekennzeichnet, daß der Brennstoffzellenmodul (3) zumindest eine Brennstoffzelle (7) mit einem Elektrolyten aus einer karbonatsalzhaltigen Schmelze aufweist.

6. Modulkraftwerk nach einem der Ansprüche 1 bis 3, dadurch gekennzeichnet, daß der Brennstoffzellenmodul (3) zumindest eine "Solid Oxide"-Brennstotfzelle (7) aufweist.

7. Modulkraftwerk nach einem der Ansprüche 1 bis 3, dadurch gekennzeichnet, daß der Brennstoffzellenmodul (3) zumindest eine Protonenaustauschmembran-Brennstoffzelle (7) aufweist.

8. Modulkraftwerk nach einem der Ansprüche 1 bis 7, dadurch gekennzeichnet, daß Brennstoffzellen (7) nach den Ansprüchen 4 und/oder 5 und/oder 6 und/oder 7 kombiniert sind.

9. Modulkraftwerk nach einem der Ansprüche 1 bis 8, dadurch gekennzeichnet, daß zusätzlich ein Wasserdampferzeugungsmodul (12) vorgesehen ist, welches von einem Teilstrom des Brennstoffgases beheizbar ist.

## Claims

1. A modular power plant for the generation of electrical energy from solar energy, comprising
a) a conversion module (1) for the conversion of solar energy into biological raw materials which are satisfactorily free from sulphur which originates from the raw material, in the form of an agricultural cultivated area having plants cultivated thereon, particularly C4 plants, which can be convened into biological raw materials,
b) a gasification module (2) designed for allothermic gasification, in the form of a gasification reactor for the gasification of the biological raw materials to form a fuel gas, with a supply of externally generated heat and with a gasifying agent which essentially contains steam, at temperatures and at a dwell time of the products to be gasified in the gasification zone of the gasification reactor which suppress the condensation of tar in zones of the gasification module (2) downstream of the gasification zone and/or in a downstream fuel cell module (3),
c) a fuel cell module (3) in which the fuel gas is converted by means of fuel cell technology,
wherein the conversion module (1) comprises a unit (4) for the harvesting of biological raw materials and a processing unit (5) for the processing of biological raw materials to form a gasification feed material, wherein the gasification module (2) is connected to the processing unit (5) via a charging device (6), wherein the fuel cell module (3) is connected to the gasification module (2) via a device (8) for cleaning the fuel gas, wherein the outputs of the gasification module (2) and of the fuel cell module (3) are matched to each other with respect to the output of the installation and so that a partial stream of the fuel gas can be used for the generation of steam and a further partial stream and/or waste heat from the modular power plant can be used for drying the harvested biological raw materials, wherein the conversion module (1) is sized in accordance with the predetermined installation output with respect to the cultivated area from case to case, wherein the conversion module (1) comprises a processing unit (5) in the form of at least one harvesting machine for the biological raw materials and in the form of a chopping device (9) or pelletising device (10), and has a storage device (11) for the processed biomass, with which quantitative variations which result from the plant growth of the processed biological raw materials can be evened out, and wherein in addition the essential elements of the conversion module (1), of the gasification module (2) and of the fuel cell module (3) are prefabricated as modular elements of the modular power plant which are transportable in their assembled and dismantled states.

2. A modular power plant according to claim 1, characterised in that the gasification module (2) is equipped with at least one gasification reactor which operates under pressure with steam as a gasifying and fluidising agent.

3. A modular power plant according to claims 1 or 2, characterised in that a quantitative ratio of oxygen to biological raw material and a gas phase temperature are set in the gasification module (2) which ensure that the fuel gas is practically free from nitrogen oxides.

4. A modular power plant according to any one of claims 1 to 3, characterised in that the fuel cell module (3) comprises at least one fuel cell (7) with an electrolyte which contains phosphoric acid.

5. A modular power plant according to any one of claims 1 to 3, characterised in that the fuel cell module (3) comprises at least one fuel cell (7) with an electrolyte comprising a melt which contains carbonate salts.

6. A modular power plant according to any one of claims 1 to 3, characterised in that the fuel cell module (3) comprises at least one "solid oxide" fuel cell (7).

7. A modular power plant according to any one of claims 1 to 3, characterised in that the fuel cell module (3) comprises at least one proton exchange membrane fuel cell (7).

8. A modular power plant according to any one of claims 1 to 7, characterised in that fuel cells (7) according to any one of claims 4 and/or 5 and/or 6 and/or 7 are combined.

9. A modular power plant according to any one of claims 1 to 8, characterised in that a steam generation module (12) is provided in addition which can be heated by a partial stream of the fuel gas.

## Revendications

1. Centrale électrique modulaire pour la production d'énergie électrique à partir d'énergie solaire, comprenant
a) un module de transformation (1) pour la transformation d'énergie solaire en matières premières biologiques suffisamment exemptes de soufre natif, en forme de surface de culture agricole plantée de plantes transformables en matières premières biologiques, en particulier de plantes C4,
b) un module de gazéification (2) conçu pour une gazéification allotherme, en forme de réacteur de gazéification pour la gazéification des matières premières biologiques afin d'obtenir un gaz combustible par apport de chaleur produite extérieurement, et avec un agent de gazéification contenant pour l'essentiel de la vapeur d'eau, a des températures et avec une durée de séjour des produits à gazéifier dans la zone de gazéification du réacteur de gazéification empêchant une condensation des goudrons dans les zones du module de gazéification (2) situées en aval de la zone de gazéification et/ou dans un module de pile à combustible (3) implanté en aval,
c) un module de pile à combustible (3) dans lequel le gaz combustible est transformé en courant à l'aide d'une technologie de piles à combustible,
le module de transformation (1) comportant un équipement (4) de récolte de matières premières biologiques et un équipement de préparation (5) pour donner aux matières premières biologiques la forme d'un préproduit de gazéification, le module de gazéification (2) étant relié à l'équipement de préparation (5) par un dispositif d'alimentation (6), le module de pile à combustible (3) étant relié au module de gazéification (2) par un dispositif (8) d'épuration de gaz combustible, le module de gazéification (2) et le module de pile à combustible (3) étant adaptés l'un à l'autre en termes de rendement, par rapport au rendement de l'installation, de façon qu'un courant partiel du gaz combustible puisse être mis en oeuvre pour la production de vapeur d'eau et qu'un autre courant partiel et/ou de la chaleur dissipée de la centrale électrique modulaire puisse l'être pour le séchage des matières premières biologiques récoltées, le module de transformation (1) étant dimensionné par rapport à la surface de culture au cas par cas en fonction du rendement prédéfini de l'installation, le module de transformation (1) comprenant un équipement de préparation (5) en forme d'au moins une machine de récolte pour les matières premières biologiques et en forme de dispositif hacheur (9) ou de dispositif de granulation (10) et possédant, pour la biomasse préparée, un dispositif de stockage (11) permettant de compenser les variations quantitatives, liées à la végétation, des matières premières biologiques préparées, et les principaux éléments du module de transformation (1), du module de gazéification (2) et du module de pile à combustible (3) étant par ailleurs préfabriqués sous la forme d'éléments modulaires de la centrale électrique modulaire, transportables à l'état monté et démonté.

2. Centrale électrique modulaire selon la revendication 1, caractérisée en ce que le module de gazéification (2) est équipé d'au moins un réacteur de gazéification, lequel fonctionne sous pression avec de la vapeur d'eau comme agent de gazéification et de fluidification.

3. Centrale électrique modulaire selon la revendication 1 ou 2, caractérisée en ce que la proportion oxygène/matière première biologique et la température de phase gazeuse adoptées dans le module de gazéification (2) garantissent un gaz combustible pratiquement exempt d'oxyde d'azote.

4. Centrale électrique modulaire selon l'une des revendications 1 à 3, caractérisée en ce que le module de pile à combustible (3) comporte au moins une pile à combustible (7) avec un électrolyte contenant de l'acide phosphorique.

5. Centrale électrique modulaire selon l'une des revendications 1 à 3, caractérisée en ce que le module de pile à combustible (3) comporte au moins une pile à combustible (7) avec un électrolyte constitué d'un bain contenant des sels carbonates.

6. Centrale électrique modulaire selon l'une des revendications 1 à 3, caractérisée en ce que le module de pile à combustible (3) comporte au moins une pile à combustible du type "Oxyde Solide" (7).

7. Centrale électrique modulaire selon l'une des revendications 1 à 3, caractérisée en ce que le module de pile à combustible (3) comporte au moins une pile à combustible (7) à membrane échangeuse de protons.

8. Centrale électrique modulaire selon l'une des revendications 1 à 7, caractérisée en ce que des piles à combustible (7) selon les revendications 4 et/ou 5 et/ou 6 et/ou 7 sont combinées.

9. Centrale électrique modulaire selon l'une des revendications 1 à 8, caractérisée en ce qu'il est prévu en outre un module de production de vapeur d'eau (12), lequel peut être chauffé par un courant partiel de gaz combustible.
